# EUROPÄISCHE PATENTSCHRIFT

(11) **EP 1 448 733 B1**
(45) Veröffentlichungstag und Bekanntmachung des Hinweises auf die Patenterteilung: **24.05.2006**
(21) Anmeldenummer: 02790296.4
(22) Anmeldetag: 18.10.2002
(51) Int. Cl.: C09D 151/00, C08L 51/00, C08K 5/15

(54) **THERMISCH HÄRTBARE BINDEMITTEL**
THERMALLY CURABLE BINDING AGENTS
LIANTS THERMODURCISSABLES

(30) Priorität: 23.10.2001 DE 10151569
(43) Veröffentlichungstag der Anmeldung: 25.08.2004
(73) Patentinhaber: BASF Aktiengesellschaft, 67056 Ludwigshafen (DE)
(72) Erfinder: GERST, Matthias, 67433 Neustadt (DE); LAUBENDER, Matthias, 67105 Schifferstadt (DE); RECK, Bernd, 67269 Grünstadt (DE)
(86) Internationale Anmeldenummer: PCT/EP2002/011672
(87) Internationale Veröffentlichungsnummer: WO 2003/035778

(56) Entgegenhaltungen:
- EP-A- 0 507 634
- EP-A- 0 619 341
- EP-A- 0 854 153
- US-A- 4 727 097
- US-A- 5 290 857
- US-A- 5 990 228

## Beschreibung

Die vorliegende Erfindung betrifft ein thermisch härtbares Bindemittel auf der Basis einer wäßrigen Polymerdispersion, enthaltend
- ein Emulsionspolymerisat (kurz EP),
- ein Polymerisat, welches zu mindestens 5 Gew.-% aus einer ethylenisch ungesättigten Monocarbonsäure, Dicarbonsäure oder Dicarbonsäureanhydrid aufgebaut ist (kurz Säurepolymer SP) und
- mono- oder multifunktionelle Epoxidverbindungen als Härter und als Härter zusätzlich ein Polyol oder ein Alkanolamin mit mindestens zwei Hydroxylgruppen.

Weiterhin betrifft die vorliegende Erfindung ein Verfahren zur Herstellung der thermisch härtbaren Bindemittel auf der Basis einer wäßrigen Polymerdispersion und deren Verwendung als Bindemittel für Formkörper oder Vliese aus fasrigen oder körnigen Materialien.

Thermisch härtbare Bindemittel aus Polycarbonsäuren und Polyolen bzw. Alkanolaminen sind z.B. aus der EP-A 445578, EP-A 583086, EP-A 882074, EP-A 882093 oder DE-A 19949592 bekannt.

In der EP-A 882074 und der DE-A 19949592 werden u.a. Alkoxysilane als mögliche Additive und Härter für derartige Bindemittel genannt. Als weitere Additive und Härter für Bindemittel aus Polycarbonsäuren und Polyolen werden in der EP-A 445578 u.a. mehrwertige Amine offenbart.

Die EP-A 576 128 beschreibt Klebstoffzusammensetzungen, die eine säurereiche Polymerkomponente und eine säurearme Polymerkomponente enthalten. Die säurereiche Polymerkomponente basiert auf einem monomeren Gemisch von 40 bis 95 % eines Alkylacrylats oder -methacrylats und 5 bis 60 % einer ethylenisch ungesättigten Säure, wie Acrylsäure oder Methacrylsäure. Die säurearme Polymerkomponente basiert auf einem Monomergemisch aus 90 bis 100 % eines Alkylacrylats oder Alkylmethacrylats und 0 bis 10 % einer ethylenisch ungesättigten Säure. Die Herstellung der Zusammensetzung erfolgt durch wässrige Emulsionspolymerisation, wobei die säurereiche Polymerkomponente in Anwesenheit der säurearmen Polymerkomponente oder umgekehrt polymerisiert wird. Der pH der Zusammensetzung wird durch Zugabe von Ammoniumhydroxid oder Natriumhydroxid auf den gewünschten Wert eingestellt. Die Zusammensetzung ist als druckempfindlicher Klebstoff, Laminationsklebstoff, Klebstoff für textile Gewebe, Fliesen und Verpackungen und als Holzleim brauchbar.

Gegenüber den bislang bekannten thermisch härtbaren Bindemitteln war es Aufgabe der vorliegenden Erfindung, verbesserte thermisch härtbare Bindemittel bereitzustellen, welche u.a. geeignet sind, die Festigkeit der daraus erhaltenen Formkörper deutlich zu erhöhen und welche sich durch eine deutlich verringerte Wasseraufnahme und Lösungsmittelaufnahme sowie durch deutlich abgesenkte Auswaschverluste auszeichnen. Gleichzeitig sollten die erfindungsgemäßen Bindemittel durch ein möglichst einfaches und wirtschaftliches Verfahren erhältlich sein und eine möglichst niedrige Härtungstemperatur aufweisen.

Demgemäß wurde ein thermisch härtbares Bindemittel auf der Basis einer wäßrigen Polymerdispersion gefunden, enthaltend
- ein Emulsionspolymerisat (kurz EP),
- ein Polymerisat, welches zu mindestens 5 Gew.-% aus einer ethylenisch ungesättigten Monocarbonsäure, Dicarbonsäure oder Dicarbonsäureanhydrid aufgebaut ist (kurz Säurepolymer SP) und
- mono- oder multifunktionelle Epoxidverbindungen als Härter und als Härter zusätzlich ein Polyol oder ein Alkanolamin mit mindestens zwei Hydroxylgruppen.

Weiterhin wurde auch ein Verfahren zur Herstellung der erfindungsgemäßen thermisch härtbaren Bindemittel sowie deren Verwendung als Bindemittel für Formkörper oder Vliese aus fasrigen oder körnigen Materialien gefunden.

Vorzugsweise besteht das Emulsionspolymerisat (EP) zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt werden Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt, mit einer Doppelbindung z.B. Ethylen oder Propylen.

Als Hauptmonomere bevorzugt sind die C₁- bis C₁₀-Alkylacrylate und -methacrylate, insbesondere C₁- bis C₈-Alkylacrylate und -methacrylate. In Betracht kommen vorzugsweise auch Mischungen von C₁-C₁₀-Alkylacrylaten oder C₁-C₁₀-Alkylmethacrylaten mit Vinylaromaten, insbesondere Styrol.

Ganz besonders bevorzugt sind Methylacrylat, Methylmethacrylat, Ethylacrylat, n-Butylacrylat, n-Hexylacrylat, Octylacrylat und 2-Ethylhexylacrylat, Styrol sowie Mischungen dieser Monomere.

Neben den Hauptmonomeren kann das radikalisch polymerisierte Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, wie zum Beispiel Hydroxyethylacrylat, sowie (Meth)acrylamide.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl- (meth-)acrylat genannt.

Als weitere Monomere seien auch vernetzende Monomere genannt.

Weiterhin seien auch Monomere mit hydrolisierbaren Si-Gruppen genannt.

Der Anteil von Monomeren mit Carbonsäuregruppen oder Carbonsäureanhydridgruppen liegt im allgemeinen unter 10 Gew.-%, insbesondere unter 5 Gew.-%, bezogen auf EP.

Die Herstellung von EP erfolgt durch Emulsionspolymerisation.

Bei der Emulsionspolymerisation können ionische und/oder nichtionische Emulgatoren und/oder Schutzkolloide bzw. Stabilisatoren als grenzflächenaktive Verbindungen verwendet werden.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel I 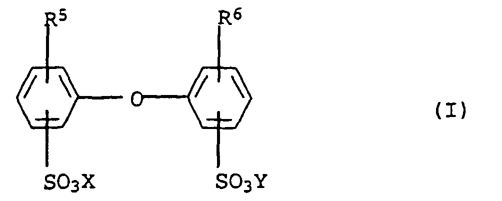 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon®NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponente handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylhexylacrylester, Mercaptoethanol, Mercaptopropyltrimethoxysilan oder tert.-Dodecylmercaptan.

Die Emulsionspolymerisation erfolgt in der Regel bei 20 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP-A 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wäßrigen Dispersion verwendet.

Die Glasübergangstemperatur des polymeren Bindemittels, bzw. des Emulsionspolymerisats beträgt vorzugsweise -60 bis +150°C, besonders bevorzugt -50 bis +140°C und ganz besonders bevorzugt -4° bis +120°C.

Die Glasübergangstemperatur läßt sich nach üblichen Methoden wie Differentialthermoanalyse oder Differential Scanning Calorimetrie (s. z.B. ASTM 3418/82, sog. "midpoint temperature") bestimmen.

Die wäßrige Polymerdispersion enthält neben dem Emulsionspolymerisat (EP) mono- oder multifunktionelle Epoxidverbindungen als Härter. Vorzugsweise werden dabei insbesondere di- oder trifunktionelle Epoxidverbindungen eingesetzt, beispielsweise die entsprechenden Glycidylether. Besonders geeignete Epoxidverbindungen sind u.a. Bisphenol-A-diglycidylether der allgemeinen Formel (II) 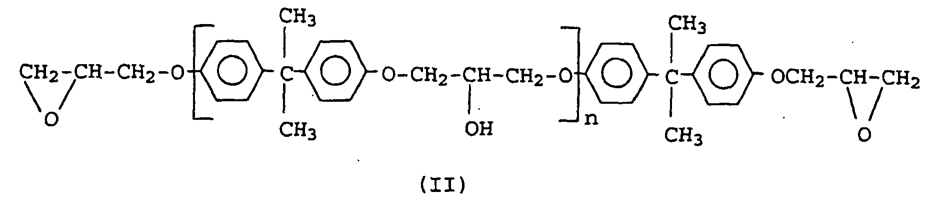 wobei n gleich 0 bis 15 bedeutet.

Das entsprechende Bisphenol-A-diglycidyletherderivat mit n=O wird beispielsweise als Handelsprodukt unter dem Namen Epicote® 828 von der Firma Shell vertrieben.

Weiter besonders geeignete Epoxidverbindungen sind u.a. Butandioldiglycidylether, Pentaerythrittriglycidylether, Neopentylglycoldiglycidether oder aber Hexandioldiglycidether. Es können auch wasserdispergierbare Epoxidverbindungen verwendet werden.

Allgemein betrachtet können als Epoxidverbindungen u.a. aromatische Glycidylverbindungen wie die Bisphenole A der Formel (II) oder ihre Bromderivate, ferner Phenolnovolak-glycidylether oder Kresolnovolak-glycidylether, Bisphenol-F-diglycidylether, Glyoxal-tetraphenoltetraglycidylether, N,N-Diglycidyl-anilin, p-Aminophenoltriglycid oder aber 4,4'-Diaminodiphenylmethantetraglycid eingesetzt werden.

Weiterhin eignen sich als Epoxidverbindungen u.a. cycloaliphatische Glycidylverbindungen wie beispielsweise Tetrahydrophthalsäurediglycidylester, Hexahydrophthalsäure-diglycidylester oder hydrierter Bisphenol-A-diglycidylether oder heterocyclische Glycidylverbindungen wie Triglycidylisocyanurat sowie Triglycidyl-bis-hydantoin.

Darüber hinaus können als Epoxidverbindungen auch cycloaliphatische Epoxidharze wie 3,4-Epoxycyclohexancarbonsäure-3'4'-epoxycyclohexylmethylester, Bis-(3,4-epoxy-cyclohexylmethyl)-adipat oder 3-(3',4'-Epoxycyclohexyl)-2,4-dioxaspiro[5,5]-8,9-epoxyundecan sowie aliphatische Epoxidharze wie Butan-1,4-dioldiglycidylether oder Polypropylenglykol-425-diglycidylether verwendet werden.

Die erfindungsgemäß eingesetzten Epoxidverbindungen können sowohl vor, als auch während der Polymerisation der das Emulsionspolymerisat bildenden Monomere sowie auch nach Beendigung dieser Polymerisation in die wäßrige Polymerdispersion eingerührt werden. Das Einrühren der Epoxidverbindungen kann dabei bei Temperaturen von 10 bis 100°C, insbesondere bei Temperaturen von 10 bis 50°C erfolgen. Vorzugsweise werden sie im flüssigen Zustand als Härter eingesetzt.

Die Menge der mono- oder multifunktionellen Epoxidverbindungen in dem Feststoffanteil des erfindungsgemäßen Bindemittels, d.h. bezogen auf 100 Gew.-Teile der Summe aus dem Emulsionspolymerisat und dem Säurepolymer (EP und SP) beträgt vorzugsweise 0,1 bis 50 Gew.-Teile, insbesondere 0,2 bis 30 Gew.-Teile, besonders bevorzugt 0,5 bis 25 Gew.-Teile.

Als Härter können sowohl einzelne, als auch Gemische verschiedener mono- oder multifunktioneller Epoxidverbindungen eingesetzt werden. Derartige Epoxidverbindungen sind im Handel erhältlich.

Die wäßrige Polymerdispersion enthält auch das eingangs definierte Säurepolymer SP.

SP ist ein radikalisch polymerisiertes Polymer, welches zu 5 bis 100 Gew.-%, vorzugsweise 20 bis 100 Gew.-%, besonders bevorzugt 40 bis 100 Gew.-% aus einer ethylenisch ungesättigten Säure oder einem ethylenisch ungesättigten Säureanhydrid aufgebaut ist.

Genannte seien insbesondere Acrylsäure oder Methacrylsäure, Maleinsäure, Fumarsäure, Itaconsäure, Maleinsäureanhydrid.

Besonders bevorzugt enthält SP Säureanhydride, z.B. Maleinsäureanhydrid oder Dicarbonsäuren, welche Anhydride bilden können, z.B. Maleinsäure.

Insbesondere enthalten die Polymeren SP 5 bis 50 Gew.-%, vorzugsweise 10 bis 40 Gew.-% der zuletzt genannten Dicarbonsäuren oder Säureanhydriden. Bei den übrigen ethylenisch ungesättigten Verbindungen aus denen das Polymer aufgebaut ist, handelt es sich vorzugsweise um Acrylsäure oder Methacrylsäure.

Die Säuren können grundsätzlich auch als Salze, z.B. Alkali- oder Ammoniumsalze vorliegen und eingesetzt werden. Ebenfalls geeignet sind Salze von Aminen.

Darüberhinaus kann das Polymer z.B. auch folgende Monomere als Aufbaukomponenten enthalten:
C₁-C₈-Alkyl(meth)acrylate, Vinylester, Vinylether, Olefine, Vinylhalogenide, ungesättigte Nitrile etc.

Die wäßrige Polymerdispersion kann auch noch ein Polyol als Vernetzungsmittel für das Polymer SP enthalten.

Bevorzugt handelt es sich dabei um niedermolekulare Verbindungen mit einem Molgewicht unter 2000 g/mol, insbesondere unter 1000 g/mol.

Bevorzugt sind 2 bis 5-wertige Polyole, wie Glycerin, Trimethylolpropan etc.

Besonders bevorzugt sind Alkanolamine. Genannt seien insbesondere Diethanolamin und Triethanolamin. Weiter bevorzugt verwendete Alkanolamine sind u.a. aus der EP-A 902796 bekannt, deren Offenbarungsgehalt diesbezüglich Bestandteil der vorliegenden Erfindungsbeschreibung ist.

Insbesondere geeignet sind Polymere SP wie sie in EP-A 882074 beschrieben sind.

SP und Polyol-Vernetzer werden bevorzugt in einem solchen Verhältnis zueinander eingesetzt, daß das Molverhältnis von Carboxylgruppen und der Hydroxylgruppen 20:1 bis 1:1, bevorzugt 8:1 bis 5:1 und besonders bevorzugt 5:1 bis 1,7:1 beträgt (Anhydridgruppen werden hierbei als 2 Carboxylgruppen berechnet).

Die Zugabe des Säurepolymeren und des Polyols zur wäßrigen Dispersion kann zu einem beliebigen Zeitpunkt erfolgen.

Die wäßrige Polymerdispersion kann Phosphor enthaltende Reaktionsbeschleuniger enthalten; bevorzugt enthält sie jedoch keine derartigen Verbindungen.

In einer besonderen Ausführungsform erfolgt die Herstellung des Emulsionspolymerisats in Gegenwart zumindest einer Teilmenge des Säurepolymeren SP. In diesem Fall ist SP vorzugsweise
- 50 bis 99,5 Gew.-% mindestens einer ethylenisch ungesättigten Mono-, Dicarbonsäure oder eines Dicarbonsäureanhydrids,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers.

Besonders bevorzugt erfolgt die Emulsionspolymerisation in Gegenwart von mindestens 30 Gew.-%, insbesondere mindestens 50 Gew.-%, ganz besonders bevorzugt 100 Gew.-% der Gesamtmenge SP.

Das Polymerisat SP enthält 50 bis 99,5 Gew.-%, bevorzugt 70 bis 99 Gew.-%, solcher Strukturelemente eingebaut, die sich von mindestens einer ethylenisch ungesättigten Mono- oder Dicarbonsäure ableiten. Diese Säuren können in dem Polymerisat gewünschtenfalls auch teilweise oder vollständig in Form eines Salzes vorliegen. Bevorzugt ist die saure Form.

Vorzugsweise ist SP zu mehr als 10 g/l (bei 25 °C) in Wasser löslich.

Bevorzugte Carbonsäuren sind C₃- bis C₁₀-Monocarbonsäuren und C₄- bis C₈-Dicarbonsäuren, insbesondere Acrylsäure, Methacrylsäure, Crotonsäure, Fumarsäure, Maleinsäure, 2-Methylmaleinsäure und/oder Itaconsäure. Besonders bevorzugt sind Acrylsäure, Methacrylsäure, Maleinsäure und Mischungen davon. Bei der Herstellung des Polymerisats SP können selbstverständlich auch anstelle der Säuren oder zusammen mit den Säuren deren Anhydride, wie Maleinsäureanhydrid, Acrylsäure- oder Methacrylsäureanhydrid eingesetzt werden.

Das Polymerisat SP enthält ferner 0,5 bis 50 Gew.-%, bevorzugt 1 bis 30 Gew.-%, wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit mindestens einem hydroxylgruppenhaltigen Amin, in einpolymerisierter Form.

Das Polymer SP liegt vorzugsweise als Kammpolymer mit kovalent gebundenen Aminseitenketten vor.

Für die Ester geeignete Monocarbonsäuren sind die zuvor genannten C₃- bis C₁₀-Monocarbonsäuren, insbesondere Acrylsäure, Methacrylsäure, Crotonsäure, und Mischungen davon.

Für die Halbester und Diester geeignete Dicarbonsäuren sind die zuvor genannten C₄- bis C₈-Dicarbonsäuren, insbesondere Fumarsäure, Maleinsäure, 2-Methylmaleinsäure, Itaconsäure, und Mischungen davon.

Vorzugsweise ist das Amin mit mindestens einer Hydroxylgruppe ausgewählt aus sekundären und tertiären Aminen, die wenigstens einen C₆- bis C₂₂-Alkyl-, C₆- bis C₂₂-Alkenyl-, Aryl-C₆- bis C₂₂-alkyl- oder Aryl-C₆- bis C₂₂-alkenylrest aufweisen, wobei die Alkenylgruppe 1, 2 oder 3 nicht benachbarte Doppelbindungen aufweisen kann.

Vorzugsweise ist das Amin hydroxyalkyliert und/oder alkoxyliert. Alkoxylierte Amine weisen vorzugsweise einen oder zwei Alkylenoxidreste mit terminalen Hydroxylgruppen auf. Vorzugsweise weisen die Alkylenoxidreste je 1 bis 100, bevorzugt je 1 bis 50, gleiche oder verschiedene Alkylenoxideinheiten, statistisch verteilt oder in Form von Blöcken auf. Bevorzugte Alkylenoxide sind Ethylenoxid, Propylenoxid und/oder Butylenoxid. Besonders bevorzugt ist Ethylenoxid.

Bevorzugt enthält das Polymerisat SP eine ungesättigte Verbindung auf Basis einer Aminkomponente eingebaut, die wenigstens ein Amin der allgemeinen Formel

R^{c}NR^{a}R^{b}

enthält, wobei
- R^{c}: für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder 3 nicht benachbarte Doppelbindungen aufweisen kann,
- R^{a}: für Hydroxy-C₁-C₆-alkyl oder einen Rest der Formel (III)

-(CH₂CH₂O)ₓ(CH₂CH(CH₃)O)_{y}-H (III)

steht, wobei
in der Formel (III) die Reihenfolge der Alkylenoxideinheiten beliebig ist und x und y unabhängig voneinander für eine ganze Zahl von 0 bis 100, bevorzugt 0 bis 50, stehen, wobei die Summe aus x und y > 1 ist,
- R^{b}: für Wasserstoff, C₁- bis C₂₂-Alkyl, Hydroxy-C₁-C₆-alkyl, C₆- bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann, oder R^{b} für einen Rest der Formel (IV)

-(CH₂CH₂O)ᵥ(CH₂CH(CH₃)O)_{w}-H (IV)

steht, wobei
in der Formel (IV) die Reihenfolge der Alkylenoxideinheiten beliebig ist und v und w unabhängig voneinander für eine ganze Zahl von 0 bis 100, vorzugsweise 0 bis 50, stehen.

Bevorzugt steht R^{c} für C₈- bis C₂₀-Alkyl oder C₈- bis C₂₀-Alkenyl, wobei der Alkenylrest 1,2 oder 3 nicht benachbarte Doppelbindungen aufweisen kann. Vorzugsweise steht R^{c} für den Kohlenwasserstoffrest einer gesättigten oder ein- oder mehrfach ungesättigten Fettsäure. Bevorzugte Reste R^{c} sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Besonders bevorzugt handelt es sich bei der Aminkomponente um ein alkoxyliertes Fettamin oder ein alkoxyliertes Fettamingemisch. Besonders bevorzugt sind die Ethoxylate. Insbesondere werden Alkoxylate von Aminen auf Basis natürlich vorkommender Fettsäuren eingesetzt, wie z. B. Talgfettamine, die überwiegend gesättigte und ungesättigte C₁₄-, C₁₆- und C₁₈-Alkylamine enthalten oder Kokosamine, die gesättigte, einfach und zweifach ungesättigte C₆-C₂₂-, vorzugsweise C₁₂-C₁₄-Alkylamine enthalten. Zur Alkoxylierung geeignete Amingemische sind z. B. verschiedene Armeen®-Marken der Fa. Akzo oder Noram®-Marken der Fa. Ceca.

Geeignete, kommerziell erhältliche alkoxylierte Amine sind z. B. die Noramox®-Marken der Fa. Ceca, bevorzugt ethoxylierte Oleylamine, wie Noramox® 05 (5 EO-Einheiten), sowie die unter der Marke Lutensol®FA vertriebenen Produkte der Fa. BASF Aktiengesellschaft.

Die Einpolymerisierung der vorgenannten Ester, Halbester und Diester bewirkt im allgemeinen eine ausgeprägte Stabilisierung einer Polymerdispersion, welche in Gegenwart von SP hergestellt wird. Die erfindungsgemäßen Bindemittel behalten ihre kolloidale Stabilität der Latexpartikel bei Verdünnung mit Wasser oder verdünnten Elektrolyten oder Tensidlösungen zuverlässig bei.

Die Veresterung zur Herstellung der zuvor beschriebenen Ester, Halbester und Diester erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und (C₁- bis C₄)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200 °C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil der Esterbildung kann mittels Infrarotspektroskopie ermittelt werden.

Nach einer bevorzugten Ausführungsform erfolgt die Herstellung der ungesättigten Ester, Halbester oder Diester und deren weitere Umsetzung zu den Polymerisaten SP ohne Zwischenisolierung der Ester und vorzugsweise nacheinander im selben Reaktionsgefäß.

Bevorzugt wird zur Herstellung der Polymerisate SP ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Neben den Bestandteilen Carbonsäure sowie Ester, Halbester und/oder Diester kann das Polymerisat SP noch 0 bis 20 Gew.-%, bevorzugt 0,1 bis 10 Gew.-%, andere Monomere einpolymerisiert enthalten. Brauchbare Monomere sind die im Zusammenhang mit dem Polymerisat A1 genannten Monomere, wobei Vinylaromaten, wie Styrol, Olefine, beispielsweise Ethylen, oder (Meth)acrylsäureester wie Methyl(meth)acrylat, Ethyl(meth)acrylat, n-Butyl(meth)acrylat, 2-Ethylhexyl(meth)acrylat und Mischungen davon besonders bevorzugt sind.

Die Herstellung der Polymerisate SP erfolgt vorzugsweise durch radikalische Polymerisation in Substanz oder in Lösung. Geeignete Lösungsmittel für die Lösungsmittelpolymerisation sind z. B. Wasser, mit Wasser mischbare organische Lösungsmittel, wie Alkohole und Ketone, beispielsweise Methanol, Ethanol, n-Propanol, Isopropanol, n-Butanol, Aceton, Methylethylketon etc., und Mischungen davon. Geeignete Polymerisationsinitiatoren sind beispielsweise Peroxide, Hydroperoxide, Peroxodisulfate, Percarbonate, Peroxoester, Wasserstoffperoxid und Azoverbindungen, wie sie oben für die Herstellung der erfindungsgemäßen Polymerdispersionen näher beschrieben werden. Die Polymerisate SP können gewünschtenfalls separat hergestellt und nach üblichem Verfahren isoliert und/oder gereinigt werden. Bevorzugt werden die Polymerisate SP unmittelbar vor der Herstellung der erfindungsgemäßen Polymerdispersionen hergestellt und ohne Zwischenisolierung für die Dispersionspolymerisation eingesetzt.

Die Herstellung der Polymerisate SP kann vorteilhaft auch durch polymeranaloge Umsetzung erfolgen. Dazu kann ein Polymerisat, das 80 bis 100 Gew.-% mindestens einer ethylenisch ungesättigten Mono- und/oder Dicarbonsäure sowie 0 bis 20 Gew.-% der zuvor genannten anderen Polymere eingebaut enthält, mit mindestens einem hydroxylgruppenhaltigen Amin umgesetzt werden.

Das Gewichtsverhältnis von Polymerisat EP zu Polymerisat SP, auf Feststoffbasis, liegt vorzugsweise im Bereich von 7:1 bis 1:7, insbesondere 3:1 bis 1:3.

Neben den Polymerisaten EP und SP und den Epoxidverbindungen kann die wäßrige Polymerdispersion noch 0 bis 50 Gew.-%, bevorzugt 0,1 bis 40 Gew.-%, bezogen auf das Polymerisat SP, mindestens eines oberflächenaktiven, alkoxylierten, bevorzugt ethoxylierten (EO) oder propoxylierten (PO), Alkylamins enthalten. Bevorzugte Alkylamine sind die Alkylamine der Formel R^{c}NR^{a}R^{b}, wie zuvor definiert, die auch in dem Polymerisat SP enthalten sind, wobei Alkylamine der Formel 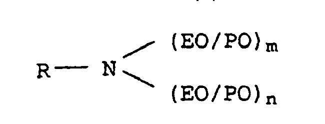 in der R ein Alkyl-, Alkenyl- oder Alkylvinylrest mit mindestens 6 Kohlenstoffatomen darstellt und m und n unabhängig voneinander ≥ 1 sind, besonders bevorzugt sind. Bevorzugte Reste R weisen 8 bis 22 Kohlenstoffatome auf.

Die in dem Polymerisat SP enthaltenen alkoxylierten Alkylamine und die zusätzlichen Alkylamin-Vernetzer können gleiche oder verschiedene Verbindungen sein.

Besonders bevorzugte Zusammensetzungen der Polymerdispersionen enthalten
a) 70 bis 30 Gew.-% Polymerisat EP,
b) 30 bis 70 Gew.-% Polymerisat SP und gegebenenfalls
c) 0 bis 10 Gew.-% oberflächenaktives alkoxyliertes Alkylamin, d) 0 bis 20 Gew.-% Polyol-Vernetzer,
e) 0 bis 5 Gew.-% Reaktionsbeschleuniger (insbesondere kein Reaktionsbeschleuniger), sowie,
bezogen auf die Gewichtssumme von a) bis e) zusätzlich die oben angegebene Menge der mono- oder multifunktionellen Epoxidverbindungen.

Zusätzlich zu den genannten Bestandteilen können übliche Zusätze je nach Anwendungszweck zugesetzt werden. Die Polymerdispersion und die weitere Zusätze enthaltende Polymerdisperison wird im folgenden zusammenfassend auch "Zusammensetzung" genannt.

Die in der Zusammensetzung gegebenenfalls zusätzlich enthaltenen Komponenten werden im allgemeinen nach dem Ende der Emulsionspolymerisation zugegeben.

Weiter können die Zusammensetzungen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten. Schließlich können die Zusammensetzungen übliche Brandschutzmittel, wie z. B. Aluminiumsilikate, Aluminiumhydroxide, Borate und/oder Phosphate enthalten.

Die Zusammensetzungen können auch in Abmischung mit anderen Bindemitteln, wie beispielsweise Harnstoff-Formaldehyd-Harzen, Melamin-Formaldehyd-Harzen oder Phenol-Formaldehyd-Harzen eingesetzt werden.

Die Zusammensetzungen sind vorzugsweise formaldehydfrei. Formaldehydfrei bedeutet, dass die Zusammensetzungen keine wesentlichen Mengen an Formaldehyd enthalten und auch bei Trocknung und/oder Härtung keine wesentlichen Mengen an Formaldehyd freigesetzt werden. Im Allgemeinen enthalten die Zusammensetzungen < 100 ppm Formaldehyd. Sie ermöglichen die Herstellung von Formkörpern mit kurzer Härtungszeit und verleihen den Formkörpern ausgezeichnete mechanische Eigenschaften.

Die Zusammensetzungen sind vor der Anwendung im Wesentlichen unvernetzt und daher thermoplastisch. Wenn erforderlich, kann jedoch ein geringer Grad an Vorvernetzung des Polymerisats EP eingestellt werden, z. B. durch Verwendung von Monomeren mit zwei oder mehr polymerisierbaren Gruppen.

Die Polymerdispersion bzw. Zusammensetzung kann z.B. als Bindemittel für faserige und körnige Substrate, wie z. B. Holzschnitzel, Holzfasern, Textilfasern, Glasfasern, Mineralfasern oder Naturfasern wie Jute, Flachs, Hanf oder Sisal, aber auch Korkschnitzel oder Sand verwendet werden. Nach Härtung werden Formteile mit einer hohen mechanischen Festigkeit erhalten, die auch im Feuchtklima ihre Dimensionsstabilität behalten. Bevorzugt ist die thermische Härtung. Die Härtungstemperaturen betragen im Allgemeinen 80 bis 250 °C, vorzugsweise 100 bis 200 °C.

Beim Erhitzen verdampft das in der Zusammensetzung enthaltene Wasser und es kommt zur Härtung der Zusammensetzung. Diese Prozesse können nacheinander oder gleichzeitig ablaufen. Unter Härtung wird in diesem Zusammenhang die chemische Veränderung der Zusammensetzung verstanden, z. B. die Vernetzung durch Knüpfung von kovalenten Bindungen zwischen den verschiedenen Bestandteilen der Zusammensetzungen, Bildungen von ionischen Wechselwirkungen und Clustern, Bildung von Wasserstoffbrücken. Weiterhin können bei der Härtung auch physikalische Veränderungen im Bindemittel ablaufen, wie z. B. Phasenumwandlungen oder Phaseninversionen. Ein Vorteil des erfindungsgemäßen thermisch härtbaren Bindemittels ist, dass ihre Härtung bei vergleichsweise niedrigen Temperaturen erfolgen kann. Die Dauer und die Temperatur der Erwärmung beeinflussen den Aushärtungsgrad. Die Güte der Vernetzung läßt sich über den Auswaschverlust in Wasser bei Raumtemperatur (RT) bestimmen. Dabei erhält man den sogenannten Gelgehalt des Polymers. Der Gelgehalt von Polymerfilmen nach einer 30 min. langen Vernetzung bei 130°C beträgt mindestens 50 %, bevorzugt mindestens 70 %. Der Grad der durch das Epoxid hervorgerufenen Vernetzung läßt sich u.a. durch Infrarotspektroskopie ermitteln.

Die Aushärtung kann auch in zwei oder mehr Stufen erfolgen. So kann z. B. in einem ersten Schritt die Härtungstemperatur und -zeit so gewählt werden, dass nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen thermisch härtbaren Bindemittels zur Herstellung von mit Bindemittel imprägnierten Halbzeugen möglich, die an anderer Stelle verformt und ausgehärtet werden können.

Ein weiterer Gegenstand der Erfindung ist die Verwendung der thermisch härtbaren Bindemittel auf Basis einer wässrigen Polymerdispersion als Bindemittel für Formkörper und Vliese aus fasrigen oder körnigen Materialien und anschließende Härtung.

Derartige Formkörper haben bevorzugt eine Dichte von 0,2 bis 1,4 g/cm³ bei 23 °C.

Als Formkörper kommen insbesondere Platten und konturierte Formteile in Betracht. Ihre Dicke beträgt im Allgemeinen mindestens 1 mm, vorzugsweise mindestens 2 mm, ihre Oberfläche beträgt typischerweise 200 bis 200 000 cm². In Betracht kommen insbesondere Holzfaser- und Spanplatten, Korkplatten, -blöcke und -formen, Dämmstoffplatten und -rollen, z. B. aus Mineral- und Glasfasern, Automobilinnenteile, z. B. Türinnenverkleidungen, Armaturenträger, Hutablagen, etc.

Die Gewichtsmenge des verwendeten Bindemittels beträgt im Allgemeinen 0,5 bis 40 Gew.-%, vorzugsweise 1 bis 30 Gew.-% (Bindemittel fest), bezogen auf das Substrat (Fasern, Schnitzel oder Späne) aus dem dann der Formkörper oder das Vlies gebildet wird.

Die Fasern, Schnitzel oder Späne können direkt mit dem Bindemittel beschichtet werden oder mit dem wässrigen Bindemittel vermischt werden. Die Viskosität des wässrigen Bindemittels wird vorzugsweise auf 10 bis 4 000 mPas, bevorzugt auf 30 bis 2 000 mPas (DIN 53019, Rotationsviskosimeter bei 250 sec⁻¹) eingestellt.

Die Mischung aus Fasern, Schnitzeln und Spänen und dem Bindemittel kann z. B. bei Temperaturen von 10 bis 150 °C vorgetrocknet werden und anschließend zu den Formkörpern, z. B. bei Temperaturen von 80 bis 250 °C, vorzugsweise 100 bis 200 °C, und Drücken von im Allgemeinen 2 bis 1 000 bar, vorzugsweise 10 bis 750 bar, besonders bevorzugt 200 bis 500 bar zu den Formkörpern verpresst werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z. B. Holzspänen und Holzfasern, hergestellt werden können. Die Wasserfestigkeit von Holzwerkstoffen kann erhöht werden, indem man dem Bindemittel eine handelsübliche wässrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das Gewichtsverhältnis Bindemittel fest:Holzspäne vorzugsweise 0,02:1 bis 0,3:1 beträgt. Eine gleichmäßige Verteilung lässt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250 °C, bevorzugt von 120 bis 225 °C durch Anwendung von Drücken von üblicherweise 10 bis 750 bar zu einer Platte verpresst. Die benötigten Presszeiten können in einem weiten Bereich variieren und liegen im Allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180 °C hergestellt werden.

Zur Beleimung werden die Holzfasern im Allgemeinen mit einem Luftstrom aufgewirbelt und das Bindemittel in den so erzeugten Fasernstrom eingedüst ("Blow-Line" Verfahren). Das Verhältnis Holzfasern zu Bindemittel, bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z. B. 130 bis 180 °C getrocknet, zu einem Faservlies ausgestreut und bei Drücken von 10 bis 50 bar zu Platten oder Formkörpern verpresst.

Die beleimten Holzfasern können auch, wie z. B. in der DE-A 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z. B. Türinnenverkleidungen von Kraftfahrzeugen weiterverarbeitet werden.

Auch andere Naturfaserstoffe, wie Sisal, Jute, Hanf, Flachs, Kokosfasern, Bananenfasern und andere Naturfasern können mit den Bindemitteln zu Platten und Formteile verarbeitet werden. Die Naturfaserstoffe können auch in Mischungen mit Kunststofffasern, z. B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10.Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den Bindemitteln imprägniert werden, gegebenenfalls unter Zusatz eines Benetzungshilfsmittels. Die imprägnierten Matten werden dann im bindemittelfeuchten oder vorgetrockneten Zustand z. B. bei Temperaturen zwischen 100 und 250 °C und Drücken zwischen 10 und 100 bar zu Platten oder Formteilen verpreßt.

Bevorzugt haben die mit den Bindemitteln imprägnierten Substrate beim Verpressen einen Restfeuchtegehalt von 3 bis 20 Gew.-%, bezogen auf das zu bindende Substrat.

Die erhaltenen Formkörper haben eine geringe Wasseraufnahme, eine niedrige Dickenquellung nach Wasserlagerung, eine gute Festigkeit und sind formaldehydfrei.

Außerdem kann man die Zusammensetzungen als Bindemittel für Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Die Beschichtungs- und Imprägniermassen verleihen den Platten einen hohen Biegemodul. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2.000 mm.

Ferner können die Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die Komponenten der Zusammensetzung sind in der Beschichtungsmasse im Allgemeinen in einer Menge von 1 bis 65 Gew.-% enthalten. Der Anteil der inerten Füllstoffe liegt im Allgemeinen bei 0 bis 85 Gew.-%, der Wasseranteil beträgt mindestens 10 Gew.-%.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf den Trockengehalt der Zusammensetzung, betragen im Allgemeinen 2 bis 100 g/m².

Die einzusetzenden Mengen an Zusatzstoffen sind dem Fachmann bekannt und richten sich im Einzelfall nach den gewünschten Eigenschaften und dem Anwendungszweck.

Die Zusammensetzungen sind auch als Bindemittel für Dämmstoffe aus anorganischen Fasern, wie Mineralfasern und Glasfasern brauchbar. Solche Dämmstoffe werden technisch durch Verspinnen von Schmelzen der entsprechenden mineralischen Rohstoffe hergestellt, siehe US-A 2,550,465, US-A 2,604,427, US-A 2,830,648, EP-A 354 913 und EP-A 567 480. Die Zusammensetzung wird dann auf die frisch hergestellten, noch heißen anorganischen Fasern aufgesprüht. Das Wasser verdampft dann weitgehend und die Zusammensetzung bleibt im Wesentlichen unausgehärtet als Viskosemasse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200 °C zu einer steifen Matrix aus. Nach dem Härten werden die Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die erfindungsgemäßen Bindemittel können u.a. bei der Herstellung von Filterpapieren für Luft- und Ölfilter verwendet werden. Weiterhin können sie als Bestandteile von Dekorpapieren eingesetzt werden.

Die Zusammensetzungen eignen sich außerdem als Bindemittel für Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z. B. Aramid-, Kohlenstoff-, Polyacrylnitril-, Polyester-, Mineral-, PVC- oder Glasfasern genannt.

Im Falle der Verwendung als Bindemittel für Faservliese können die Zusammensetzungen z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d. h. verfestigt.

Dazu wird das Bindemittel vorzugsweise im Gewichtsverhältnis Faser/Bindemittel (fest) von 10:1 bis 1:1, besonders bevorzugt von 6:1 bis 3:1 auf das Rohfaservlies z. B. durch Beschichten, Imprägnieren, Tränken aufgebracht.

Das Bindemittel wird dabei vorzugsweise in Form einer verdünnten wässrigen Zubereitung mit 95 bis 40 Gew.-% Wasser verwendet.

Nach dem Aufbringen des Bindemittels auf das Rohfaservlies erfolgt im allgemeinen eine Trocknung und Vernetzung vorzugsweise bei 100 bis 400, insbesondere 130 bis 280 °C, ganz besonders bevorzugt 130 bis 230 °C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen. Sie lassen sich auch zum Halbzeug trocknen, welches eine spätere Verarbeitung erlaubt.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z. B. aus PVC.

Bei der Verwendung als Dachbahnen werden die gebundenen Faservliese im Allgemeinen mit Bitumen beschichtet.

Aus den wässrigen Zusammensetzungen lassen sich weiterhin geschäumte Platten oder Formkörper herstellen. Dazu wird zunächst das in der Zusammensetzung enthaltene Wasser bei Temperaturen von < 100 °C bis zu einem Gehalt von < 20 Gew.-% entfernt. Die so erhaltene viskose Zusammensetzung wird dann bei Temperaturen > 100 °C, vorzugsweise bei 120 bis 300 °C, verschäumt. Als Treibmittel kann z. B. das in der Mischung noch enthaltene Restwasser und/oder die bei der Härtungsreaktion entstehenden gasförmigen Reaktionsprodukte dienen. Es können jedoch auch handelsübliche Treibmittel zugesetzt werden. Die entstehenden vernetzten Polymerschäume können beispielsweise zur Wärmedämmung und zur Schallisolierung eingesetzt werden.

Mit den Zusammensetzungen lassen sich durch Imprägnierung von Papier und anschließende schonende Trocknung nach den bekannten Verfahren sogenannte Laminate, z. B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, dass es zur Aushärtung des Bindemittels kommt.

Die Zusammensetzungen können weiterhin zur Herstellung von Schleifpapier und Schleifkörpern nach den üblicherweise mit Phenolharz als Bindemittel durchgeführten Herstellverfahren verwendet werden. Bei der Herstellung von Schleifpapieren wird auf ein geeignetes Trägerpapier zunächst eine Schicht der erfindungsgemäßen Bindemittel als Grundbinder aufgetragen (zweckmäßigerweise 10 g/m²). In den feuchten Grundbinder wird die gewünschte Menge an Schleifkorn, z. B. Siliciumcarbid, Korund, etc., eingestreut. Nach einer Zwischentrocknung wird eine Deckbinderschicht aufgetragen (z. B. 5 g/m²). Das auf diese Weise beschichtete Papier wird anschließend zur Aushärtung noch 5 Min. lang bei 170 °C getempert.

Über die Zusammensetzung des Polymerisates SP kann die Härte und Flexibilität der Zusammensetzung auf das gewünschte Niveau eingestellt werden.

Die Zusammensetzungen sind weiterhin geeignet als formaldehydfreie Sandbindemittel zur Herstellung von Gussformen und Gusskernen für den Metallguss nach den üblichen thermischen Härtungsverfahren (E. Flemming, W. Tilch, Formstoffe und Formverfahren, Dt. Verlag für Grundstoffindustrie, Stuttgart, 1993).

Weiterhin eignen sie sich als Bindemittel für Kokillendämmplatten.

Die erfindungsgemäßen thermisch härtbaren Bindemittel auf Basis einer wäßrigen Polymerdispersion zeichnen sich u.a. durch eine deutlich verringerte Wasseraufnahme und Lösungsmittelaufnahme sowie durch deutlich abgesenkte Auswaschverluste aus. Die mit Hilfe der erfindungsgemäßen Bindemitteln erhaltenen Formkörper weisen u.a. eine hohe Festigkeit auf. Das ebenfalls erfindungsgemäße Verfahren zur Herstellung der thermisch härtbaren Bindelmittel ist einfach und wirtschaftlich durchzuführen.

### Beispiele

Die nachfolgenden Beispiele erläutern die Erfindung.

### Beispiel 1

### A) Herstellung des Säurepolymeren SP

In einem Druckreaktor mit Ankerrührer werden 0,55 kg vollentsalztes Wasser, 0,36 kg Maleinsäureanhydrid sowie 0,91 kg einer 40 gew.-%igen wässrigen Lösung eines ethoxylierten Oleylamins (mittlerer Ethoxylierungsgrad = 12, Fa. BASF AG) vorgelegt. Unter Stickstoffatmosphäre wird auf 125 °C erwärmt. Nach Erreichen dieser Temperatur wird innerhalb von 4 h Zulauf 1, bestehend aus 0,75 kg vollentsalztem Wasser und 1,00 kg Acrylsäure sowie innerhalb von 5 h Zulauf 2, bestehend aus 0,22 kg vollentsalztem Wasser und 0,12 kg H₂O₂ (30 gew.-%ig) gleichmäßig zudosiert. Nach Ende von Zulauf 1 werden weitere 0,11 kg vollentsalztes Wasser zugegeben. Nach Ende der Reaktion wird auf Raumtemperatur abgekühlt. Die so erhaltene wässrige Polymerisat-Lösung hat einen Feststoffgehalt von 43,2 %, einen pH-Wert von 1,7 und eine Viskosität von 450 mPas. Der K-Wert beträgt 13,3.

### B) Polymerdispersionen (Emulsionspolymerisation in Gegenwart des Säurepolymeren)

### Polymerdispersion mit EP1:

In einem 4 l-Glasgefäß mit Ankerrührer (120 UpM) werden 640 g Wasser, 133,1 g einer wässrigen Lösung des Säurepolymerisats SP (43,2 gew.-%ig) aus Beispiel A und 5,35 g (10 %) des Zulaufs 2 vorgelegt und auf 90 °C erhitzt. Nach 10 min werden bei dieser Temperatur der Rest von Zulauf 1 innerhalb von 3 h und die Restmenge von Zulauf 2 innerhalb von 3,5 h räumlich getrennt zudosiert. Anschließend wird noch 30 min bei dieser Temperatur nachpolymerisiert und das Reaktionsgemisch abgekühlt und mit Zulauf 3 abgemischt. Die so hergestellte Polymerdispersion enthält 47,3 Gew.-% nichtflüchtige Anteile und hat einen pH-Wert von 2,7. Die Viskosität der erhaltenen Polymerdispersion beträgt 630 mPas (bei 250 s⁻¹). Abschließend versetzt man die Dispersion mit 9 Gew.-Teilen Triethanolamin (bezogen auf den Feststoffgehalt).

**Zulauf 1:**

| | | |
|---|---|---|
| 185,32 g | Wasser | |
| 665,51 g | SP | (43,2%ig) |
| 805,00 g | Styrol | (100%) |
| 287,50 g | MMA | (100 %) |
| 57,50 g | HEA | (100 %) |

**Zulauf 2:**

| | |
|---|---|
| 619 g | vollentsalztes Wasser |
| 3,45 g | Natriumperoxodisulfat |

**Zulauf 3**

| | |
|---|---|
| 1863,43 g | SP (43,2 %) |
| X Gew.-% | Triethanolamin und/oder Epoxidverbindung (gemäß Tabellen I bis V) (Triethanolamin und Epoxidverbindung werden dabei zeitlich versetzt hinzugefügt) |

Dabei bedeuten:
MMA: Methylmethacrylat
HEA: Hydroxyethylacrylat

### C) Bestimmung der Wasseraufnahme (WA) und der Auswaschverluste (AV) mit Wasser

Die aus B) erhaltenen Polymerfilme ohne bzw. mit Additiven (TEA: Triethanolamin; E: Epicote® 828, Bisphenol-A-diglycidylether) wurden bei Raumtemperatur 3 Tage lang getrocknet, anschließend bei 50°C weitere 3 Tage lang getrocknet.

Zur Bestimmung der Wasseraufnahme (WA) und der Auswaschverluste (AV) wurden ca. 0,2 bis 0,3 g Polymerfilm 24 Stunden in 10 g Wasser gelagert.

Der Polymerfilm (Acrodur® D100 der BASF Aktiengesellschaft) bestand aus 100 Gew.-Teile SP (aus Acrylsäure und Maleinsäureanhydrid; erhalten im Abschnitt A) sowie aus 70 Gew.-Teile Styrol, 25 Gew.-Teile Methylmethacrylat und 5 Gew.-Teile Hydroxyethylacrylat (erhalten im Abschnitt B).

Die Ergebnisse des Beispiels 1 sind in der nachfolgenden Tabelle I wiedergegeben.

**Tabelle I**

| WA und AV nach Tempern des Polymerfilms bei 80°C für 30 min | | | | |
|---|---|---|---|---|
| Probe | TEA [Gew.-Teile, bezogen auf das zu formulierende Bindemittel] | E [Gew.-Teile, bezogen auf das zu formulierende Bindemittel] | WA [%] | AV [%] |
| 1 | 9 | 0 | 37,7 | 17,5 |
| 2 | 9 | 10 | 30,8 | 9,8 |

| WA und AV nach Tempern des Polymerfilms bei 130°C für 30 min | | | | |
|---|---|---|---|---|
| Probe | TEA [Gew.-Teile, bezogen auf das zu formulierende Bindemittel] | E [Gew.-Teile, bezogen auf das zu formulierende Bindemittel] | WA [%] | AV [%] |
| 1 | 0 | 0 | 33,8 | 4,9 |
| 2 | 0 | 10 | 25,2 | 0,9 |

### Beispiel 2

Es wurde das gleiche Säurepolymer (SP) wie im Beispiel 1 verwendet. Die Emulsionspolymerisation erfolgte analog dem Abschnitt B von Beispiel 1 in Anwesenheit des SP mit 73,5 Gew.-Teile Ethylhexylacrylat, 21 Gew.-Teile Styrol und 5,5 Gew.-Teile Hydroxyethylacrylat.

Die auf diese Weise erhaltenen Polymerfilme ohne bzw. mit Additiven (TEA: Triethanolamin; E: Epicote® 828, Bisphenol-A-diglycidylether) wurden zuerst bei Raumtemperatur 3 Tage lang und danach bei 50°C 3 weitere Tage lang getrocknet.

Zur Bestimmung der Wasseraufnahme (WA) und der Auswaschverluste (AV) wurden ca. 0,2 bis 0,3 g Polymerfilm 24 Stunden in 10 g Wasser bzw. in 100 g Aceton gelagert.

Der Polymerfilm bestand aus 100 Gew.-Teilen SP (aus Acrylsäure und Maleinsäureanhydrid, erhalten im Abschnitt A) sowie aus 73,5 Gew.-Teile Ethylhexylacrylat, 21 Gew.-Teile Styrol und 5,5 Gew.-Teile Hydroxyethylacrylat.

Die Ergebnisse des Beispiels 2 sind in der nachfolgenden Tabelle II wiedergegeben.

**Tabelle II**

| WA und AV ohne Tempern | | | | |
|---|---|---|---|---|
| Probe | TEA [Gew.-Teile, bezogen auf das zu formulierende Bindemittel] | E [Gew.-%, bezogen auf das zu formulierende Bindemittel] | WA [%] | AV [%] |
| 1 | 0 | 0 | 61,2 | 23,3 |
| 2 | 0 | 10 | 55,1 | 8,4 |
| 3 | 0 | 20 | 45,9 | 6,2 |
| 4 | 0 | 30 | 42,2 | 6,3 |
| 5 | 9 | 0 | 61,1 | 19,6 |
| 6 | 9 | 10 | 37,6 | 9, 6 |
| 7 | 9 | 20 | 35,9 | 8,9 |
| 8 | 9 | 30 | 34,5 | 7,5 |

| WA und AV nach Tempern des Polymerfilms bei 100°C für 30 min | | | | |
|---|---|---|---|---|
| Probe | TEA [Gew.-Teile, bezogen auf das zu formulierende Bindemittel] | E [Gew.-Teile, bezogen auf das zu formulierende Bindemittel] | WA [%] | AV [%] |
| 1 | 0 | 0 | 53;9 | 12,2 |
| 2 | 0 | 10 | 41,9 | 6,3 |
| 3 | 0 | 20 | 36,8 | 4,4 |
| 4 | 0 | 30 | 32 | 3,7 |

| WA und AV nach Tempern des Polymerfilms bei 150°C für 30 min | | | | |
|---|---|---|---|---|
| Probe | TEA [Gew.-Teile, bezogen auf das zu formulierende Bindemittel] | E [Gew.-%, bezogen auf das zu formulierende Bindemittel] | WA [%] | AV [%] |
| 1 | 9 | 0 | 14,1 | 1,2 |
| 2 | 9 | 10 | 10,3 | 1,2 |
| 3 | 9 | 20 | 7,9 | 0,7 |

### Beispiel 3

Es wurde das gleiche Säurepolymer (SP) und in der Monomerzusammensetzung das gleiche Emulsionspolymerisat (EP) wie im Beispiel 2 verwendet.

Die auf diese Weise erhaltenen Polymerfilme ohne bzw. mit Additiven (TEA: Triethanolamin, bzw. die in der Tabelle III angegebenen Epoxidverbindungen) wurden zuerst bei Raumtemperatur 3 Tage lang, danach bei 50°C weitere 3 Tage lang und gegebenenfalls noch 30 Minuten lang bei 100°C bzw. bei 150°C getempert.

Zur Bestimmung der Lösungsmittelaufnahme (LA) bzw. der Auswaschverluste (AV) in THF (Tetrahydrofuran) wurden ca. 0,5 g des Polymerfilms in 90 ml THF 24 Stunden lang gelagert. Für den AV-Wert wurden die Polymerfilme 7 Tage lang bei Raumtemperatur vorgetrocknet und dann bei 50°C im Umluftofen bis zur Gewichtskonstanz weitergetrocknet.

Die Ergebnisse des Beispiels 3 sind in der nachfolgenden Tabelle III wiedergegeben.

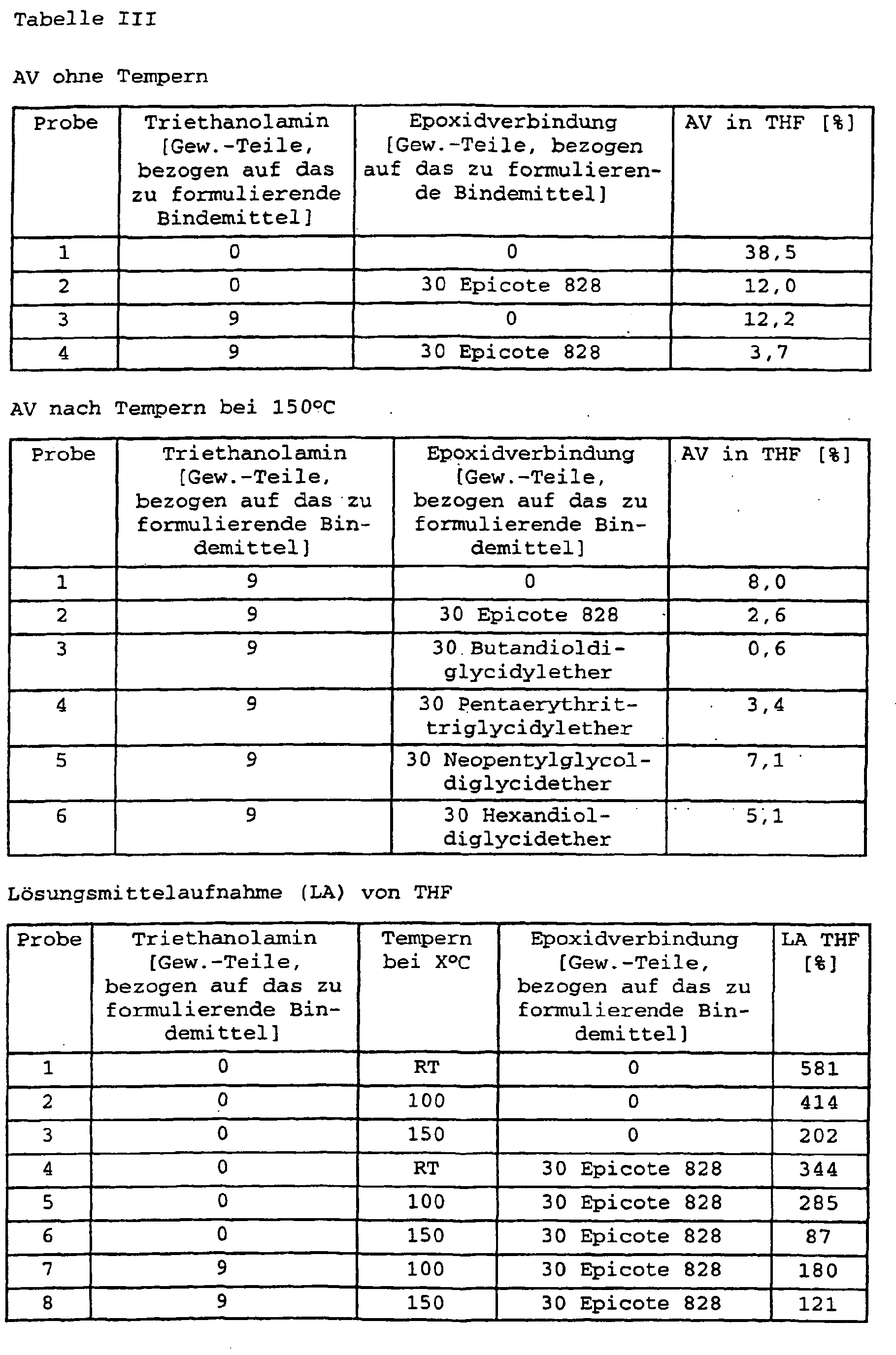

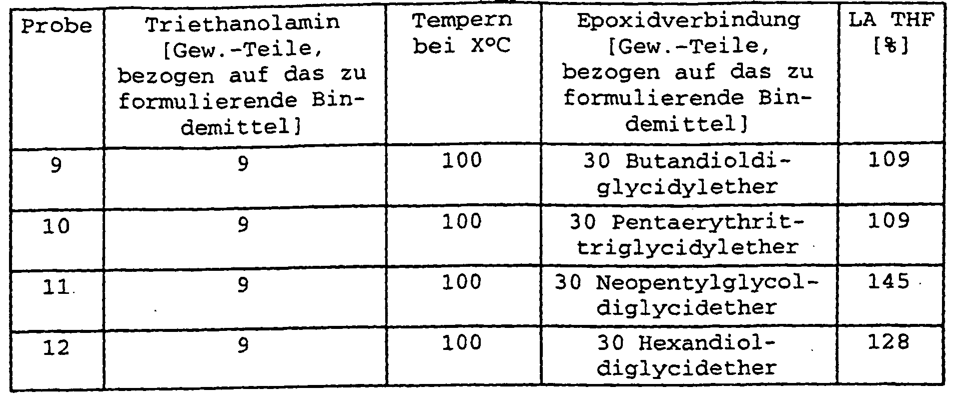

### Beispiel 4

Die im Beispiel 1 erhaltene Polymerdispersion wurde hinsichtlich ihrer Biegefestigkeit (BF) und Wasseraufnahme (WA) von Sandprüfkörpern getestet. Die Biegefestigkeit [N/mm²] wurde nach 3 Stunden Wasserlagerung bei 80°C ermittelt. Zugleich wurde die Wasseraunnahme der Sandprüfkörper gemessen. Dies erfolgte nach folgender Methode:

300 g Quarzsand H34 wurden mit den Bindemittel-Zusammensetzungen bei Raumtemperatur vermischt (5 Gew.-% oder 3 Gew.-% trockenes Bindemittel gemäß Tabelle, bezogen auf Sand). Aus den feuchten Mischungen werden in einer entsprechenden Metallform Prüfkörper (Fischer-Riegel) mit den Abmessungen 17 x 2,3 x 2,3 cm geformt, verdichtet und nach dem Entformen 2 h im Umluftofen bei Temperaturen gemäß der Tabelle ausgehärtet. Zum Verdichten wird eine Ramme von Typ PRA der Georg Fischer AG eingesetzt. Die Riegel wurden vor der Prüfung für 3 Stunden in 80°C warmen Wasser gelagert. Dann wurde die Wasseraufnahme der noch nassen Riegel bestimmt (in Tabelle WA nach WL).

Die Biegefestigkeit (BF) der so hergestellten Fischer-Riegel wird im trockenen Zustand bei 23 °C Prüfkörpertemperatur in einem Festigkeitsprüfapparat Typ PFG mit der Prüfvorrichtung PBV (Fa. Georg Fischer, Schaffhausen/CH) bestimmt (in Tabelle BF nach WL).

Die Ergebnisse der Prüfungen sind in der nachfolgenden Tabelle IV wiedergegeben.

**Tabelle IV**

| Härtungstemperatur 150°C für 2 Stunden | | | | |
|---|---|---|---|---|
| Probe | TEA [Gew.-Teile, bezogen auf das zu formulierende Bindemittel] | E [Gew.-Teile, bezogen auf das zu formulierende Bindemittel] | BF* | WA [%]* |
| 1 | 9 | 0 | 25 | 13,6 |
| 2 | 9 | 10 | 85 | 13,3 |
| 3 | 9 | 20 | 140 | 11,7 |
| 4 | 9 | 30 | 180 | 10,1 |
| 5 | 0 | 30 | 260 | 11,5 |

| Härtungstemperatur 170°C für 2 Stunden | | | | |
|---|---|---|---|---|
| Probe | TEA [Gew.-Teile, bezogen auf das zu formulierende Bindemittel] | E [Gew.-Teile, bezogen auf das zu formulierende Bindemittel] | BF* | WA [%]* |
| 1 | 9 | 0 | 75 | 13,4 |
| 2 | 0 | 10 | 235 | 13,2 |
| 3 | 9 | 10 | 320 | 9,2 |

Dabei bedeuten:
TEA: Triethanolamin
E: Epicote® 828 (Bisphenol-A-diglycidylether)

### Beispiel 5

Die in den Beispielen 1 und 2 erhaltenen Polymerdispersionen wurden hinsichtlich ihrer Eignung als Bindemittel für Korkgranulat folgendem Kochtest unterworfen:

92,5 Gew.-% Kork grob, 7,5 Gew.-% Bindemittel; Kochtest nach 3 Stunden; Pressdauer 2 Stunden.

In einem Kenwood-Labormischer werden 100 g getrocknetes Korkgranulat (gereinigter und gemahlener Kork, mittlere Partikelgröße ca. 8 mm) und 15 g je 50 %iger Bindemittel aus den aufgeführten Beispielen für 2 min vermischt. Die mit Bindemittel beaufschlagten Korkpartikel werden ohne weitere Trocknung in einer zweiteiligen Metallform bei einer Presstemperatur von 80°C bis 100°C für 2 h bei einem Pressdruck von 100 bar verpresst. Die Metallform weist eine Innenabmessung von 15 x 15 mm auf, wobei Boden und Stempel der Form zum Abführen des freigesetzten Wasserdampfes mit Entlüftungslöchern perforiert sind.

Aus diesen starren Korkblöcken werden 5 x 5 x 3 cm große Probekörper geschnitten, deren Dickenquellung unter den oben angegebenen Prüfbedingungen getestet wird.

Die Ergebnisse des Kochtests von Korkblöcken sind für die Polymerdispersion aus dem Beispiel 1 in der Tabelle V und für die Polymerdispersion aus dem Beispiel 2 in der Tabelle VI wiedergegeben.

**Tabelle V**

| Probe | TEA [Gew.-Teile, bezogen auf das zu formulierende Bindemittel] | E [Gew.-Teile, bezogen auf das zu formulierende Bindemittel] | Presstemperatur | Quellung [%] |
|---|---|---|---|---|
| 1 | 9 | 0 | 80 | Zerfallen |
| 2 | 9 | 0 | 90 | Zerfallen |
| 3 | 9 | 0 | 100 | Zerfallen |
| 4 | 9 | 30 | 80 | 58 |
| 5 | 9 | 30 | 90 | 30 |
| 6 | 9 | 30 | 100 | 24 |

**Tabelle VI**

| Probe | TEA [Gew.-Teile, bezogen auf das zu formulierende Bindemittel] | E [Gew.-Teile, bezogen auf das zu formulierende Bindemittel] | Presstemperatur | Quellung [%] |
|---|---|---|---|---|
| 1 | 9 | 0 | 80 | Zerfallen |
| 2 | 9 | 0 | 90 | Zerfallen |
| 3 | 9 | 0 | 100 | Zerfallen |
| 4 | 9 | 30 | 80 | 41 |
| 5 | 9 | 30 | 90 | 23 |
| 6 | 9 | 30 | 100 | 23 |

Dabei bedeuten:
TEA: Triethanolamin
E: Epicote® 828 (Bisphenol-A-diglycidylether)

## Patentansprüche

1. Thermisch härtbares Bindemittel auf der Basis einer wäßrigen Polymerdispersion, enthaltend
- ein Emulsionspolymerisat (kurz EP),
- ein Polymerisat, welches zu mindestens 5 Gew.-% aus einer ethylenisch ungesättigten Monocarbonsäure, Dicarbonsäure oder Dicarbonsäureanhydrid aufgebaut ist (kurz Säurepolymer SP),
- mono- oder multifunktionelle Epoxidverbindungen als Härter und als Härter zusätzlich ein Polyol oder ein Alkanolamin mit mindestens zwei Hydroxylgruppen.

2. Thermisch härtbares Bindemittel nach Anspruch 1, wobei die mono- oder die multifunktionelle Epoxidverbindung im flüssigen Zustand als Härter eingesetzt wird.

3. Thermisch härtbares Bindemittel nach den Ansprüchen 1 oder 2, wobei eine di- oder eine trifunktionelle Epoxidverbindung als Härter eingesetzt wird.

4. Thermisch härtbares Bindemittel nach den Ansprüchen 1 bis 3, wobei das Emulsionspolymerisat (EP) zu mindestens 40 Gew.-% aus sogenannten Hauptmonomeren, ausgewählt aus C₁- bis C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren aufgebaut ist.

5. Thermisch härtbares Bindemittel nach den Ansprüchen 1 bis 4, wobei das Säurepolymere (SP) aufgebaut ist aus
- 50 bis 99,5 Gew.-% mindestens einer ethylenisch ungesättigten Mono- oder Dicarbonsäure eines Dicarbonsäureanhydrids oder deren Mischungen,
- 0,5 bis 50 Gew.-% wenigstens einer ethylenisch ungesättigten Verbindung, die ausgewählt ist aus den Estern ethylenisch ungesättigter Monocarbonsäuren und den Halbestern und Diestern ethylenisch ungesättigter Dicarbonsäuren mit einem mindestens eine Hydroxylgruppe aufweisenden Amin und
- gegebenenfalls bis zu 20 Gew.-% mindestens eines weiteren Monomeren.

6. Thermisch härtbares Bindemittel nach den Ansprüchen 1 bis 5, wobei das Gewichtsverhältnis des Emulsionspolymerisats (EP) zum Säurepolymer (SP), auf Feststoffbasis, im Bereich von 7:1 bis 1:7 liegt.

7. Verfahren zur Herstellung von thermisch härtbaren Bindemitteln gemäß den Ansprüchen 1 bis 6, auf der Basis einer wäßrigen Polymerdispersion, **dadurch gekennzeichnet, daß** zunächst die das Emulsionspolymerisat bildenden Monomere in Anwesenheit des Säurepolymers polymerisiert werden und in die auf diese Weise erhaltene Dispersion anschließend mono- oder multifunktionelle Epoxidverbindungen eingerührt werden.

8. Verfahren zur Herstellung von thermisch härtbaren Bindemitteln gemäß den Ansprüchen 1 bis 6, auf der Basis einer wäßrigen Polymerdispersion, **dadurch gekennzeichnet, daß** während der Polymerisation der das Emulsionspolymerisat bildenden Monomere und in Anwesenheit des Säurepolymers die mono- oder die multifunktionellen Epoxidverbindungen eingerührt werden.

9. Verfahren nach den Ansprüchen 7 oder 8, wobei das Einrühren der mono- oder der multifunktionellen Epoxidverbindungen bei Temperaturen von 10 bis 100°C erfolgt.

10. Verwendung der thermisch härtbaren Bindemittel gemäß den Ansprüchen 1 bis 6, auf der Basis einer Polymerdispersion als Bindemittel für Formkörper oder Vliese aus fasrigen oder körnigen Materialien.

## Claims

1. A heat-curable binder based on an aqueous polymer dispersion comprising
- an emulsion polymer (EP),
- a polymer composed of at least 5% by weight of an ethylenically unsaturated monocarboxylic acid, dicarboxylic acid or dicarboxylic anhydride (acid polymer SP for short),
- monofunctional or polyfunctional epoxide compounds as curatives and further as curative a polyol or an alkanolamine containing at least two hydroxyl groups.

2. The heat-curable binder according to claim 1, wherein the monofunctional or polyfunctional epoxide compound is employed in the liquid state as curative.

3. The heat-curable binder according to either of claims 1 and 2, wherein a difunctional or trifunctional epoxide compound is employed as curative.

4. The heat-curable binder according to any of claims 1 to 3, wherein the emulsion polymer (EP) is composed of at least 40% by weight of what are known as principal monomers selected from C₁ to C₂₀ alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds, or mixtures of these monomers.

5. The heat-curable binder according to any of claims 1 to 4, wherein the acid polymer (SP) is composed of
- from 50 to 99.5% by weight of at least one ethylenically unsaturated monocarboxylic or dicarboxylic acid, a dicarboxylic anhydrde or mixtures thereof,
- from 0.5 to 50% by weight of at least one ethylenically unsaturated compound selected from the esters of ethylenically unsaturated monocarboxylic acids and the monoesters and diesters of ethylenically unsaturated dicarboxylic acids with an amine containing at least one hydroxyl group, and
- if appropriate, up to 20% by weight of at least one further monomer.

6. The heat-curable binder according to any of claims 1 to 5, wherein the weight ratio of the emulsion polymer (EP) to the acid polymer (SP) based on solids is in the range from 7:1 to 1:7.

7. A process for preparing the heat-curable binder according to any of claims 1 to 6 based on an aqueous polymer dispersion, which comprises first polymerizing the constituent monomers of the emulsion polymer in the presence of the acid polymer and then stirring monofunctional or polyfunctional epoxide compounds into the dispersion thus obtained.

8. A process for preparing the heat-curable binder according to any of claims 1 to 6 based on an aqueous polymer dispersion, which comprises stirring in the monofunctional or polyfunctional epoxide compounds during the polymerization of the constituent monomers of the emulsion polymer and in the presence of the acid polymer.

9. The process according to claim 7 or 8, wherein the monofunctional or polyfunctional epoxide compounds are incorporated by stirring at temperatures from 10 to 100°C.

10. The use of the heat-curable binder according to any of claims 1 to 6 based on a polymer dispersion as a binder for moldings or nonwovens formed from fibrous or particulate materials.

## Revendications

1. Liant thermodurcissable à base d'une dispersion aqueuse de polymère, contenant
- un produit de polymérisation en émulsion (en abrégé EP),
- un polymère qui est constitué d'au moins 5 % en poids d'un acide monocarboxylique, d'un acide dicarboxylique ou d'un anhydride d'acide dicarboxylique éthyléniquement insaturé (en abrégé polymère d'acide SP),
- des composés époxy monofonctionnels ou multifonctionnels comme agents de durcissement et additionnellement, comme agent de durcissement, un polyol ou une alcanolamine comprenant au moins deux groupes hydroxy.

2. Liant thermodurcissable suivant la revendication 1, dans lequel le composé époxy monofonctionnel ou multifonctionnel est, comme agent de durcissement, mis en oeuvre à l'état liquide.

3. Liant thermodurcissable suivant les revendications 1 ou 2, dans lequel un composé époxy difonctionnel ou trifonctionnel est mis en oeuvre comme agent de durcissement.

4. Liant thermodurcissable suivant les revendications 1 à 3, dans lequel le produit de polymérisation en émulsion (EP) est constitué d'au moins 40 % en poids de ce que l'on appelle des monomères principaux, choisis parmi des (méth)acrylates d'alkyle en C₁-C₂₀, des esters vinyliques d'acides carboxyliques contenant jusqu'à 20 atomes de C, des substances vinyl-aromatiques comportant jusqu'à 20 atomes de C, des nitriles éthyléniquement insaturés, des halogénures de vinyle, des éthers vinyliques d'alcools contenant 1 à 10 atomes de C, des hydrocarbures aliphatiques comportant 2 à 8 atomes de C et une ou deux doubles liaisons, ou des mélanges de ces monomères.

5. Liant thermodurcissable suivant les revendications 1 à 4, dans lequel le polymère d'acide (SP) est constitué
- de 50 à 99,5 % en poids d'au moins un acide monocarboxylique ou dicarboxylique éthyléniquement insaturé, d'un anhydride d'acide dicarboxylique ou de leurs mélanges,
- de 0,5 à 50 % en poids d'au moins un composé éthyléniquement insaturé, qui est choisi parmi les esters d'acides monocarboxyliques éthyléniquement insaturés et les hémiesters et diesters d'acides dicarboxyliques éthyléniquement insaturés comportant une amine présentant au moins un groupe hydroxyle, et
- éventuellement jusqu'à 20 % en poids d'au moins un autre monomère.

6. Liant thermodurcissable suivant les revendications 1 à 5, dans lequel le rapport pondéral entre le produit de polymérisation en émulsion (EP) et le polymère d'acide (SP) est, sur base de la matière solide, de l'ordre de 7/1 à 1/7.

7. Procédé de préparation de liants thermodurcissables suivant les revendications 1 à 6, à base d'une dispersion aqueuse de polymère, **caractérisé en ce qu'**on polymérise tout d'abord les monomères formant le produit de polymérisation en émulsion, en présence du polymère d'acide, et on délaye ensuite, dans la dispersion obtenue de cette manière, des composés époxy monofonctionnels ou multifonctionnels.

8. Procédé de préparation de liants thermodurcissables suivant les revendications 1 à 6, à base d'une dispersion aqueuse de polymère, **caractérisé en ce qu'**on délaye les composés époxy monofonctionnels ou multifonctionnels pendant la polymérisation des monomères formant le produit de polymérisation en émulsion et en présence du polymère d'acide.

9. Procédé suivant les revendications 7 ou 8, dans lequel le délayage des composés époxy monofonctionnels ou multifonctionnels a lieu à des températures de 10 à 100°C.

10. Utilisation des liants thermodurcissables suivant les revendications 1 à 6, à base d'une dispersion de polymère, comme liants pour des corps façonnés ou des non-tissés à base de matières fibreuses ou granulaires.
